# EUROPEAN PATENT APPLICATION

(11) **EP 0 644 343 A1**
(43) Date of publication of application: **22.03.1995**
(21) Application number: 94202515.6
(22) Date of filing: 02.09.1994
(51) Int. Cl.: F16C 33/38, F16C 33/46, F16C 33/78, F16C 43/00, F16C 33/44, B29C 71/04

(54) **Cage with seal element for a rolling bearing, a method of manufacturing it, and rolling bearing comprising such a cage**

(30) Priority: 16.09.1993 NL 9301603
(71) Applicant: SKF Industrial Trading & Development Co, B.V., NL-3430 DT Nieuwegein (NL)
(72) Inventor: Tadic, Vendran Andelo, NL-3921 AA Elst (NL); Kapaan, Hendrikus Jan, NL-3435 DM Nieuwegein (NL); Lankamp, Herman, NL-3981 GX Bunnik (NL)
(74) Representative: Kupecz, Arpad

(57) **Abstract**

The invention relates to a roller bearing comprising a cage (3) with a seal (5,6) attached thereto. The cage (3) and the seal (5,6) possess different material properties, adapted to the function they perform in a roller bearing. The seal (5,6) is more elastic than the material of the cage (3). According to a preferred embodiment these different material properties are achieved by cross-linking of the material of the cage and/or seal by radiation. The invention further relates to a method of manufacturing such a bearing and a cage with an attached seal for such a bearing.

## Description

The present invention relates to a roller bearing comprising two race rings with rotating bodies between them which are held in position by a cage having recesses for the individual rotating bodies, which cage is fitted with a seal sealing the space between the race rings and around the rotating bodies.

Such a roller bearing is known from the British patent application 2 115 889. This application describes a cage for a conical needle or roller bearing, whereby the cage is provided with tag members. These tag members extend circumferentially from the cage, whereby these tag members are present on the inside as well as the outside of the cage and their ends cooperate with shoulders of the race rings. This gives the tag members in the roller bearing a centering and sealing effect. The cage with sealing tag members is integrally made from plastic.

The type of roller bearing described above has the disadvantage that the sealing tag members and the cage are of equal hardness, so that the sealing effect of the tag members is not satisfactory.

It is the object of the present invention to provide an improved roller bearing in which the above disadvantage is removed.

According to the invention this objective is achieved with a roller bearing of the kind mentioned in the preamble, which is characterized in that the material of the cage and the material of the attached seal have different material properties and the material of the seal is more elastic than that of the cage.

Said measures have made it possible that both the cage and the seal possess the material properties necessary for their function, the seal with its elasticity safeguarding a good sealing effect.

According to one preferred embodiment of the roller bearing according to the invention, the various material properties are achieved because the material of the cage and/or the seal comprises thermoplastic polymer and the material is cross-linked by radiation. The different material properties can, for instance, be obtained by different degrees of cross-linking of the cage and sealing material.

A roller bearing containing a cage and/or seal made from material comprising cross-linked, thermoplastic polymer can be used under high load. This load may so high that temperatures near or above the melting point of the thermoplastic polymer occur, however, without adverse effects on the roller bearing, such as damage or destruction.

In a favourable embodiment the material of the cage and/or seal may contain a plasticizer or elastomeric material.

The differing presence of plasticizer or elastomeric material in the cage and seal may bring about different material properties of the material of the cage and the material of the attached seal. Also, the plasticizer and the elastomeric material may be cross-linked, thus contributing to the material properties desired for the cage and seal.

In an alternative embodiment of the roller bearing according to the invention the different material properties of the seal and cage are achieved by the fact that seal and cage are separate parts, which are attached to each other, for instance, by ultrasonic welding or by a mechanical connection such as a snap connection.

According to a preferred embodiment the seal seals on to the smooth surfaces of the race rings.

Such an embodiment of the roller bearing has the advantage that there are no grooves, recesses, shoulders or the like on to which the seal seals, so that fewer processing operations are necessary for the manufacture of such a roller bearing. The invention has made this possible by making the seal more elastic than the cage. In this way a tighter seal is obtained on the race rings without the necessity for the above-mentioned grooves, recesses, shoulders or the like.

The invention further relates to a method of manufacturing a roller bearing whereby a seal is formed at a cage.

The method according to the invention is characterized in that the material properties of the cage or the seal are changed by cross-linking the respective material of the cage or the seal by radiation, especially ionizing radiation and preferably β radiation.

In this way a roller bearing can be manufactured effectively whereby the material properties of the cage or the seal can be adapted to the intended operating conditions of the roller bearing.

The invention relates further to a cage or cage member for use in the roller bearing described above.

The invention will now be further elucidated with the aid of the drawing exemplifying the embodiments of the invention.

Fig. 1 is an axial cross section of part of a roller bearing according to the invention in a first embodiment.

Fig. 2-5 are sections of further embodiments of the roller bearing according to the invention, corresponding with Fig. 1.

Fig. 6 is a circumferential section of the roller bearing according to line VI-VI in Fig. 5.

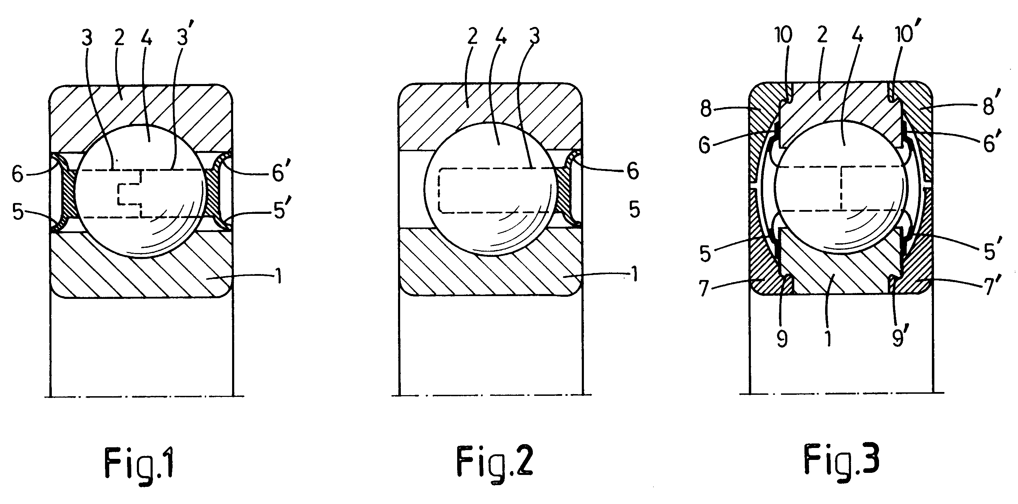

Fig. 1 shows part of a roller bearing, in which reference number 1 indicates an inner race ring and reference number 2 indicates an outer race ring. Both race rings 1, 2 are rotatably guided in relation to each other with the aid of rotating bodies located in the space between the two race rings. In this embodiment of the roller bearing the rotating bodies are balls 4. The balls 4 are spaced at the desired distance by means of a cage having recesses for the various balls 4. In this embodiment the cage consists of cage members 3 and 3' and in the depicted embodiment each cage member has a seal formed thereon. In the present case this seal consists of sealing members 5 and 6 attached to the cage member 3, and sealing members 5' and 6' attached to the cage member 3'. The sealing members 5 and 5' seal on to the inner race ring 1 and the sealing members 6 and 6' seal on to the outer race ring 2. The sealing members close off the space between the inner race ring 1 and the outer race ring 2 without requiring any grooves or recesses in the race rings for this purpose. In the embodiment illustrated the cage member 3 is connected to cage member 3' by means of a mechanical connection, for instance a snap connection.

At least the seal is made from a material containing polymer. The material of the cage and the seal may be reinforced with fibers such as glass fibers. The cage and the seal attached to it may be manufactured by injection moulding. This is possible with a two-stage method or a single-stage method, such as injection moulding, whereby, if so desired, materials having different material properties are used for the cage and the seal. If desired, the material properties may also be influenced by cross-linking brought about by radiation such as ionizing radiation, especially β radiation. In case the material of the cage and/or the seal comprises thermoplastic polymer that is difficult to cross-link, such as nylon, plasticizers or additives that are known per se, such as polyethylene, may be added to the material of the cage or the seal, to promote cross-linking. Such additives are cross-linked under the influence of radiation and thus change the material properties. In particular the material becomes harder and less elastic. In case the same material is used for the cage and the seal, the cage should be more extensively cross-linked by radiation than the seal. This can be done by adjusting the duration of radiation and/or the intensity, depending on the function of the part concerned. In a roller bearing in which the seals of the cage are attached to and consequently rotate with the cage, the speed of the seals in relation to the race ring which they seal on to, is slower than in a roller bearing operating equally fast, wherein the seals are attached to one of the two race rings. This low speed lengthens the operational life of the seal and consequently of the roller bearing.

Fig. 2 shows an embodiment of a roller bearing according to the invention, whereby the cage which comprises cage member 3 and the seal with the sealing members 5 and 6, are made as one piece. This embodiment is suitable, for instance, for uses where a seal on one side of the roller bearing is sufficient or in multi-sided roller bearings.

Fig. 3 shows a further embodiment of a roller bearing according to the invention in which the inner race ring 1, the outer race ring 2, the cage members 3, 3' and the ball 4 are similar to those described in Fig. 1. The cage members 3, 3' have seals attached to them with sealing members 5, 6 and 5', 6' respectively. The sealing members 5, 5' seal on to the lateral surfaces of the inner race ring 1. The sealing members 6, 6' seal on to the lateral surfaces of the outer race ring 2. The inner race ring is provided with protection rings 7, 7' protecting the seals. For this purpose the inner race ring may be provided with means for fixing these protection rings 7, 7', such as circumferential grooves 9, 9'. In a similar way the outer race ring 2 is provided with protection rings 8, 8' that may be fixed with the aid of grooves 10, 10'. The protection rings 7 and 8 and 7' and 8' respectively do not come into contact with each other while the roller bearing is in operation. The protection rings and the sealing members form a labyrinth making it practically impossible for dirt getting into the space defined by the seals and the race rings. In the presently illustrated embodiment the cage members 3 and 3' are formed into a cage by means of ultrasonic welding. Depending on the application, one or both cage members may be provided with a seal.

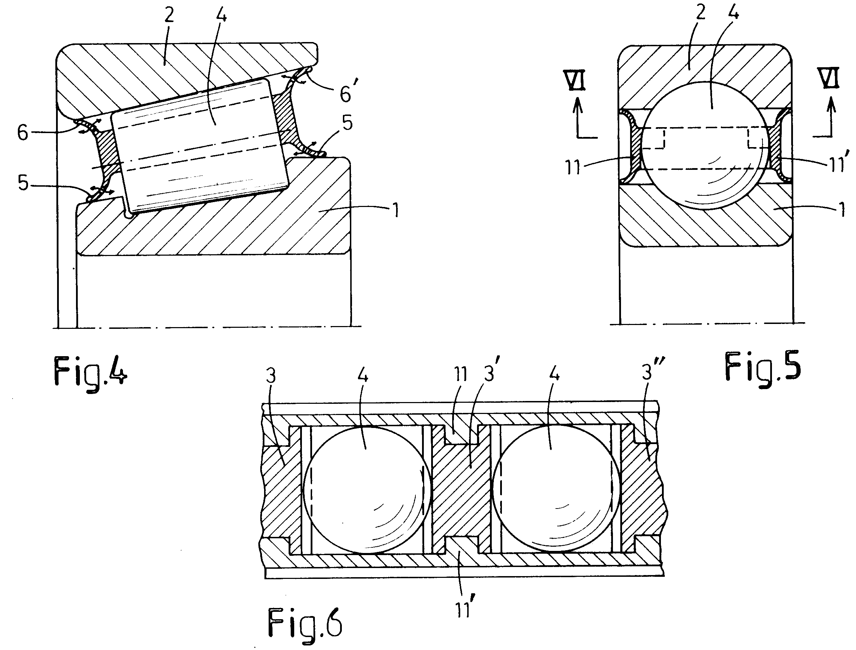

Fig. 4 shows a taper roller bearing which in construction is similar to the roller bearing shown in Fig. 1. In this illustration the rotating body is a tapered rotating body. The sealing members 5, 5', 6, 6' are provided with openings allowing oil to pass to ensure good lubrication of the roller bearing. This prevents the pump effect, occurring in such a taper roller bearing, from causing the part of the space nearest the shaft of the roller bearing, in which the tapered rotating bodies are housed, to dry out and to be deprived of lubrication. The openings in the sealing members 5, 5', 6, 6' are of such dimensions that solid dirt particles are kept back by the seal, creating, as it were, a filter. Externally the seal may be provided with means for keeping off or removing dirt from the contact surfaces between the seal and the race rings. These means may be in the shape of blades or the like.

In Fig. 5 the seals 11, 11' and the cage are separate parts. At least the seals 11, 11' are made from elastic material containing polymer, for instance polypropylene (PP) / nitrile rubber (NBR) mixture, polypropylene (PP) / EPDM mixture, while the cage may also be made from metal or the like. In the illustrated example of an embodiment the seals 11, 11' are attached to the cage by means of a snap connection. As is shown in Fig. 6, the cage consists of separate cage members 3, 3', 3''. The roller bearings in the form of balls are indicated with the reference numbers 4.

The embodiments shown are very simple partly due to the absence of grooves, recesses or the like provided for the sealing members in the race rings and are easy to manufacture because of the limited number of processing operations necessary.

The invention is not limited to the embodiments shown. The invention is also applicable to other types of roller bearings such as pivot bearings.

## Claims

1. A roller bearing comprising two race rings with rotating bodies between them which are held in position by a cage having recesses for the individual rotating bodies, which cage is fitted with a seal sealing the space between the race rings and around the rotating bodies, **characterized** in that the material of the cage and the material of the attached seal have different material properties and the material of the seal is more elastic than that of the cage.

2. A roller bearing according to claim 1, **characterized** in that the material of the cage and/or the seal comprises thermoplastic polymer and the material is cross-linked by radiation.

3. A roller bearing according to claim 1 or 2, **characterized** in that the material of the cage and/or of the seal contains plasticizer or elastomeric material.

4. A roller bearing according to any one of the preceding claims, **characterized** in that the cage and the seal are integrally made.

5. A roller bearing according to any one of the claims 1 to 3, **characterized** in that the seal and the cage are separate members and that the seal is attached to the cage by ultrasonic welding.

6. A roller bearing according to any one of the claims 1 to 3, **characterized** in that the seal and the cage are separate parts and that the seal is attached to the cage by a mechanical connection, such as a snap connection.

7. A roller bearing according to any one of the preceding claims, **characterized** in that the seal is provided with means for the removal of dirt from the contact surfaces between the seal and the race rings.

8. A roller bearing according to claim 7, **characterized** in that the means are in the shape of blades.

9. A roller bearing according to any one of the preceding claims, **characterized** in that the seal seals on to the smooth surfaces of the race rings.

10. A roller bearing according to any one of the preceding claims, **characterized** in that the seal is provided with openings to let oil pass through and to keep dirt out.

11. A method for the manufacture of a roller bearing according to any one of claims 1 to 3 and 5 to 10, in which a cage provided with rotating bodies is placed between two race rings, **characterized** in that the cage comprises two cage members of which at least one cage member is provided with a seal.

12. A method for the manufacture of a roller bearing according to any one of claims 2 to 10, in which a seal is formed at a cage, **characterized** in that the material properties of the cage or the seal are changed by cross-linking the respective materials of the cage or the seal by radiation.

13. A method according to claim 12, **characterized** in that the radiation applied is ionizing radiation.

14. A method according to claim 13, **characterized** in that the ionizing radiation applied is β radiation.

15. Cage or cage member for application in a roller bearing according to any one of claims 1 to 10, **characterized** in that the material of the cage and the material of the seal possess different material properties and that the material of the seal is more elastic than that of the cage.
